# EUROPEAN PATENT APPLICATION

(11) **EP 1 079 202 A1**
(43) Date of publication of application: **28.02.2001**
(21) Application number: 00202863.7
(22) Date of filing: 16.08.2000
(51) Int. Cl.: G01B 3/10

(54) **Tape measure housing with projection or saw guide**

(30) Priority: 17.08.1999 GB 9919311; 29.06.2000 GB 0015795
(71) Applicant: Spanbok, Gary Antony, London NW4 3XD (GB)
(72) Inventor: Spanbok, Gary Antony, London NW4 3XD (GB)
(74) Representative: Lucas, Brian Ronald

(57) **Abstract**

For internal measurements a projection (20) is used with the tape measure housing (11). The projection (20) comprises a flat edge and rounded corners. A tape (12) with scales (13) on both sides or a single scale on one side is used. On one side of housing (50) a saw guide is provided with a planar surface (51) and a recess (53).

## Description

The present invention relates to a tape measure.

A wide variety of tape measures are available on the market at present. Many such tape measures are constructed from a plastic or metal housing in which a metal tape is coiled around a spool. The tape has a scale printed or scored on one side thereof. The spool is constructed to exert a permanent bias on the tape in one direction such that the tape always tries to return to a coiled position within the housing. However, a user can easily overcome the bias to extend the tape from the housing to measure a length. Some tape measures have manually operable locking mechanisms which can releasably lock the tape in an extended position. Many such tape measures have the length of the housing printed thereon so that it can be mentally added to the extended length of tape in appropriate circumstances.

The applicant has noticed several difficulties with the aforementioned tape measures. Firstly, it is sometimes difficult to measure accurately because the housing cannot be placed hard against the surface where it is desired to take the measurement. Secondly, time is taken whilst mentally adding the length of the housing to the measured length and the mental calculation is not always performed correctly. In particular, the shape of the housing (for example, partly circular) does not facilitate accurate measurements into corners, for example, the workpiece itself does not permit accurate measurement, and/or once a measurement has been made it is frequently incorrectly transcribed onto another object.

Addressing the first problem the present invention provides a tape measure which comprises a housing with a first end and a second end and a tape having a scale on at least one side thereof, the arrangement being such that, in use, said tape is extendable from and retractable into said housing through said first end, characterised in that said housing is provided with a member which, in use, projects from said housing and said second end is at the extremity of said member.

There may be a plurality of members provided on the housing which, in use, would help to align the tape measure with a wall, for example.

Turning now to the second problem US-A-3 255 531 discloses a tape measure having a tape mounted within a housing and which is extendable and retractable therefrom. The tape has a scale printed on both sides with one scale being offset with respect to the other. The tape is arranged within the housing such that the scale normally on the underside of the tape is visible through a window in the top of the housing. The scale on the underside is offset by an amount equal to the length of the housing such that the reading through the window includes the length of the extended tape plus the length of the housing.

Advantageously, tape measures in accordance with the present invention further comprise a window in said housing the arrangement being such that, in use, part of said scale is visible through said window, and the reading of said scale through said window includes the distance between said first end and said second end.

One advantage of such an arrangement is that the reading through the window can include the length of the housing (including the member). The member ensures that more accurate readings and transcription are performed. In combination, these features facilitate faster and more accurate readings and transcription.

In one embodiment, said scale is offset with respect to a scale on the other side thereof.

In this embodiment, the scale normally on the underside of the tape is visible through the window.

Advantageously, said member comprises a substantially flat edge.

This enables the member to be properly aligned with a wall, for example, and/or more accurately transcribe the measurement onto another object.

Preferably, said member comprises at least two rounded corners.

This inhibits *inter alia* the member catching on the clothing of a user.

If desired the projection may be retractable into the housing and preferably is arranged to move to an operative position when the tape is extended.

Advantageously, said window comprises a hairline for reading said scale and may optionally include a magnifying portion to facilitate reading of said tape.

Alternatively, the window or housing may have other indicating means to indicate the appropriate point at which to read the scale.

Preferably, said tape measure further comprises a first guide located adjacent said first end within said housing, by which, in use, said tape is guided.

Advantageously, said first guide comprises a guide wheel and/or a guide member arranged so that, in use, said tape passes therearound or therebetween.

Preferably, said tape measure further comprises a second guide located adjacent said window within said housing, by which, in use, said tape is guided.

The combination of first and second guides within the housing and the bias on the tape provided by the spool helps to ensure that the length of tape between the window and the first end is substantially constant.

Advantageously, said tape measure further comprises a releasable locking means which, in use, can releasably lock said tape in an extended position.

One advantage of this is that the tape measure can then be used to more accurately transfer the measurement onto a piece of wood, for example. A user can lock the tape in position and quickly and easily transfer the measurement to the piece of wood without having to remember the measurement and/or re-adjust the tape measure to that measurement. When the member has a flat side, extra accuracy is provided because the user can simply run a pencil along the member to mark the wood.

Preferably, said member is integral with said housing.

Advantageously, said tape measure further comprises a saw guide.

Preferably, said saw guide defines a substantially planar surface by which, in use, a saw can be guided.

Advantageously, said saw guide comprises a substantially planar surface or a plurality of members which protrude from said housing.

For a better understanding of the present invention reference will now be made, by way of example, to the accompanying drawings, in which:
Fig. 1 is a perspective view of a prior art tape measure being used in an attempt to measure between two walls;
Fig. 2 is a perspective view of a first embodiment of a tape measure in accordance with the present invention with a portion of tape extended therefrom;
Fig. 3 is a plan view of the tape measure of Fig. 2;
Fig. 4 is side cross section through the tape measure of Figs 2 and 3;
Fig. 5 is a perspective view of the tape measure of Figs 2 to 4 being used to measure between two walls;
Fig. 6 is a side cross section of a second embodiment of a tape measure in accordance with the present invention;
Fig. 7 is a perspective view of a the tape measure of Fig. 6 being used to measure between two walls, with one side of the housing of the tape measure omitted; and
Fig. 8 is a rear view of a third embodiment of a tape measure in accordance with the present invention.

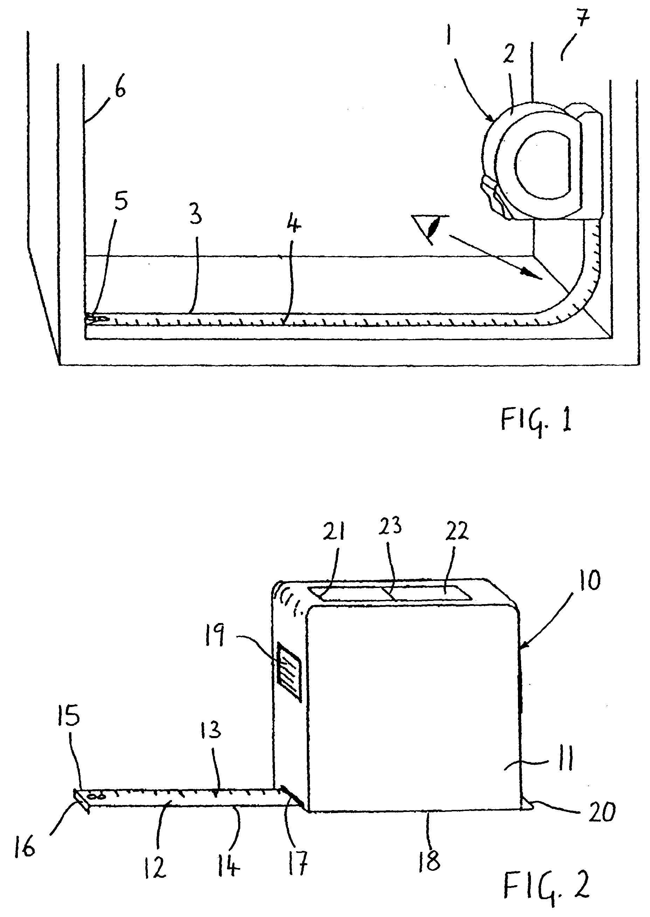

Referring to Figure 1 a prior art tape measure is generally identified by reference numeral 1. The prior art tape measure 1 comprises a housing 2 in which is stored a tape 3. The tape 3 is constructed from steel with a scale 4 printed on one side and is wound in a spiral configuration on a spool (not shown) within the housing. The spool provides a biasing force such that, when not in use, the tape 3 is withdrawn into the housing 2. A sliding stop 5 at one end of the tape 3 prevents the tape 3 from being completely withdrawn into the housing 2 when not in use. The tape 3 can be withdrawn from the housing 2 against the bias of the spool to measure a variety of lengths. For example, Figure 1 shows the prior art tape measure 1 being used in an attempt to measure the distance between two walls 6 and 7.

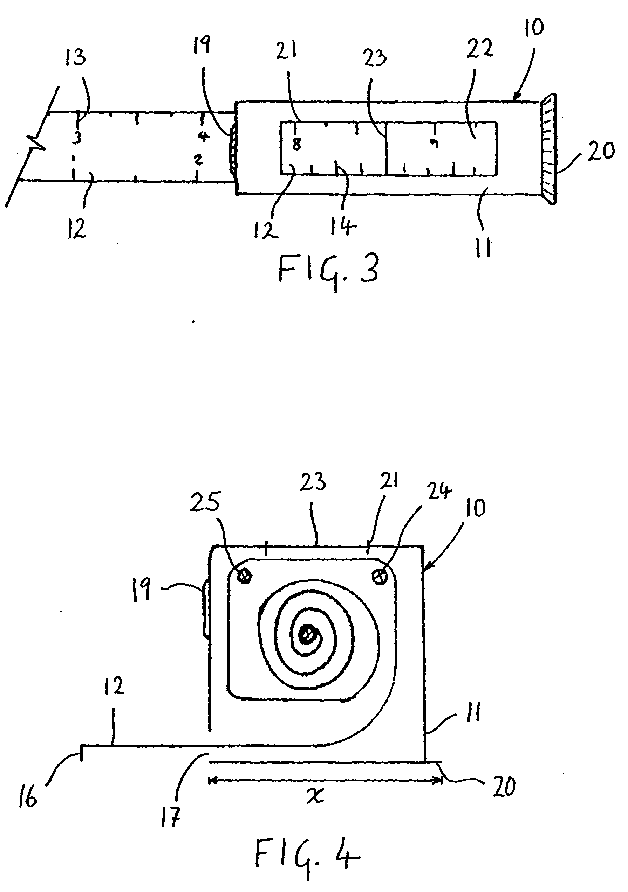

Referring to Figures 2 and 3 a first embodiment of tape measure in accordance with the present invention is generally identified by reference numeral 10. Tape measure 10 comprises a housing 11 in which is stored a tape 12 having a scale 13 on one side thereof and a scale 14 on the other side thereof. Scale 14 is offset with respect to scale 13. The free end 15 of the tape 12 has a sliding stop 16 affixed thereto by rivets. The arrangement of the tape 12 within the housing 11 is described in more detail below.

The housing 11 is constructed from plastics material and has six generally flat sides. A housing mouth 17 at a first end of a substantially straight side 18 of the tape measure 11 allows the tape 12 to be extended from and retracted into the housing 11. A lock 19 is provided on the housing 11 so that the tape 12 can be releasably locked in an extended position from the housing 11.

A projection 20 is located at the opposite end of the substantially straight side 18 of the tape measure 10. The extremity of the projection 20 is the second end of the substantially straight side 18. Projection 20 is mounted on the housing 11 by means of glue. The projection 20 comprises a substantially flat piece of metal which has a substantially flat edge. The projection 20 further comprises two rounded corners to inhibit the projection 20 from catching on a user's clothing. In use, the projection 20 projects rearward of the housing 11 to reach into a corner between a floor and a wall, for example.

The tape measure 10 further comprises a window 21 in the housing 11. The window 21 is an aperture in the housing 11 in which is mounted a piece of transparent plastic 22 having a hairline 23 thereacross. The window 21 is constructed on the side of the housing 11 which normally faces towards a user when the tape measure 10 is being used in a conventional fashion. The tape 12 is arranged within the housing 11 such that the scale 14 is visible through the window 21.

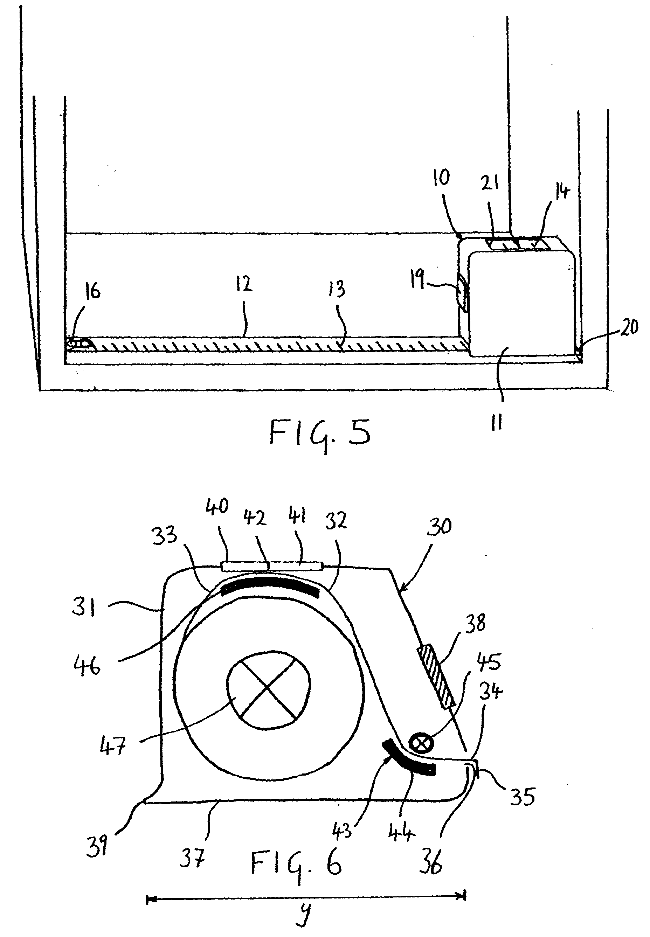

Referring to Figure 4 the arrangement of the tape 12 within the housing 11 can be seen more clearly. The tape 12 is arranged within the housing 11 such that the tape 12 is inverted before reaching the window 21, so that part of the scale 14 is visible therethrough. As mentioned above the scale 14 is offset with respect to the scale 13. The amount of this offset is equal to the distance *x* (the linear distance between housing mouth 17 and extremity of projection 20) shown in Figure 4, such that the reading of scale 14 at the hairline 23 includes the length of tape extended from the housing and the length *x* (i.e. inclusive of the length of the housing 11).

When being retracted, the tape 12 enters the housing mouth 17 and is guided around two guides 24 and 25 so that it passes by the window 21 before joining a spool, or *vice versa* when being extended. The spool exerts a retracting force on the tape 12. The two guides 24 and 25 and the retracting force exerted by the spool help to ensure that the length of tape between the hairline 23 and the housing mouth 17 is kept substantially constant. When the tape 12 is retracted to its fullest extent within the housing 11 the reading of scale 14 is equal to the distance *x*.

Referring to Figure 5 the tape measure 10 can be used to measure the distance between two walls for example. The tape 12 is extended from the housing 11 and the sliding stop 16 is pushed up against one of the two walls. The projection 20 is pushed into the corner between the other wall and the floor so that it is in contact with the wall. The scale 14 is then read through the window 21 to obtain a more accurate reading than that obtained by the method shown in Figure 1.

Additionally or alternatively, once a the tape measure 10 is in position on a workpiece the lock 19 can be actuated to maintain the tape 12 in an extended position. The tape measure 10 can then be removed from the workpiece and the sliding stop 16 and the projection 20 can be used to transfer the measurement onto a piece of wood, for example, which might be required to fit across the measured length of the workpiece. Thus the need to remember the measurement and readjust a conventional tape measure to that length so that it can be transferred to the piece of wood is avoided. Further, better accuracy is obtained when transferring the measurement to the wood because the projection 20 can be used as a rest to run a pencil along, for example.

Referring to Figure 6 a second embodiment of a tape measure in accordance with the present invention is generally identified by reference numeral 30. Tape measure 30 comprises a housing 31 in which is stored a tape 32 having a scale 33 only on one side thereof. This is preferred because it makes manufacture of a tape measure 30 much simpler and quicker. A free end 34 of the tape 32 has a sliding stop 35 affixed thereto by rivets. The arrangement of the tape 32 within the housing 31 is described in more detail below.

The housing 31 is constructed from plastics material and has six generally flat sides. A housing mouth 36 at a first end of a substantially straight side 37 of the tape measure 30 allows the tape 32 to be extended from and retracted into the housing 31. A lock 38 is provided on the housing 31 so that the tape 32 can be releasably locked in an extended position from the housing 31.

A projection 39 is located at the opposite end of the substantially straight side 37 of the tape measure 30. The extremity of the projection 39 is the second end of the substantially straight side 37. The projection 39 is constructed from plastics material and is integral with the housing 31. The projection 39 has a substantially flat side and two rounded corners at either end to inhibit the projection 39 from catching on a user's clothing. In use, the projection 39 projects rearward of the housing 31 to reach into a corner between a floor and a wall, for example.

The tape measure 30 further comprises a window 40 in the housing 31. The window 40 is an aperture in the housing 31 in which is mounted a piece of transparent plastic 41 having a hairline 42. The window 40 is constructed on the side of the housing 31 which normally faces towards a user when the tape measure 30 is being used in a conventional fashion. The tape 32 is arranged within the housing 31 such that the scale 33 is visible through the window 40.

It can be seen that the tape 32 is arranged within the housing 31 differently to the tape 12 described in connection with the first embodiment. In particular, the tape 32 is not inverted before it reaches the window 40, so that it is the scale 33 that can be read through the window 40. When being retracted, the tape 32 passes through the housing mouth 36 and between a first guide 43 which comprises a plastic guide 44 and a guide wheel 45. The tape 32 then passes up to the window 40 and over a second guide 46 and then on to a spool 47 which exerts a retracting force on the tape 32. The first guide 43, second guide 46 and the retracting force exerted by the spool 47 help to ensure that the length of the tape 32 between the hairline 42 and the housing mouth 36 is kept substantially constant. This length is substantially equal to the linear distance *y* between the housing mouth 36 and extremity of projection 39 so that the reading at hairline 42 includes the length of tape 32 which has been extended from the housing 31 and the length *y* (i.e. inclusive of the length of the housing 31).

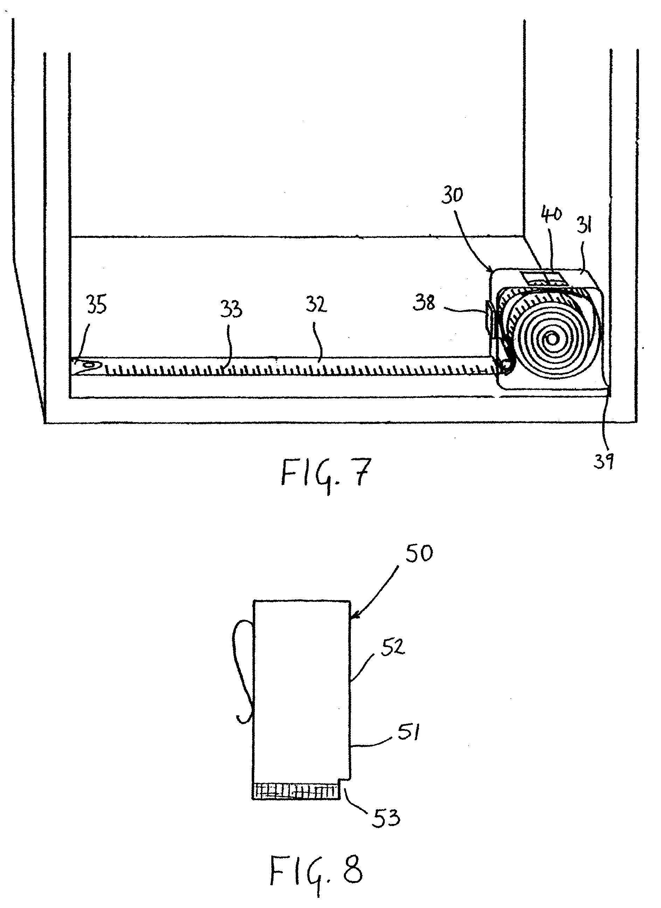

Referring to Figure 7 the tape measure 30 can be used to measure the distance between two walls for example. The tape 32 is extended from the housing 31 and the sliding stop 35 is pushed up against one of the two walls. The projection 39 is pushed up against the other wall so that the projection 39 is in contact therewith. The scale 33 is then read through the window 40 to obtain a more accurate reading than that obtained by the method shown in Figure 1.

Additionally or alternatively, once the tape measure 30 is in position on a workpiece the lock 38 can be actuated to maintain the tape 32 in an extended position. The tape measure 30 can then be removed from the workpiece and the sliding stop 35 and the projection 39 can be used to transfer the measurement onto a piece of wood, for example, which might be required to fit across the measured length of the workpiece. Thus the need to remember the measurement and readjust a conventional tape measure to that length so that it can be transferred to a piece of wood, for example, is avoided. Transcription of the measurement is also made more easy and more accurate by the projection 39 because the user can rest a pencil thereagainst to mark the wood.

Referring to Figure 8 a third embodiment of a tape measure in accordance with the present invention is generally identified by reference numeral 50. Tape measure 50 is generally similar to either of tape measures 10 or 30. However, tape measure 50 comprises a saw guide 51 on one side of the housing. The saw guide 51 is constructed integrally with the housing and comprises a substantially planar surface 52 and a recess 53.

In use, the tape measure 50 can be used as described for tape measures 10 or 30. When a length has been scribed onto a piece of wood, for example, the saw guide 51 can be used as a rest to help ensure that a saw (not shown) remains properly aligned with the mark through the sawing action. The recess 53 inhibits damage to the housing of the tape measure 50 which might be caused by the teeth of the saw.

Various modifications could be made to the embodiments described above. For example, the projection of any embodiment may be either separate or integral with the housing. Although all embodiments have been described with the window in the housing, it will be appreciated that this is not essential to the invention. The projection could be applied to conventional tape measures with the advantage that more accurate readings can be taken and/or measurements can be more accurately transcribed onto workpieces. It is not essential that the projection be located at the base of the housing. For example, the projection may be located at any height on the housing so long as the advantages of the invention are maintained. The projection may also may be constructed from a resilient material. Some advantages of this are that the projection would not damage a workpiece or floor if dropped, for example, and would inhibit the projection causing discomfort to a user if stored in a pocket in the trousers or jacket of the user.

One important variation of the above embodiments is that the projection may be manually or automatically extendable from and retractable into the housing. Such extension and retraction may be occur in phase with the extension and retraction of the tape from the housing. One advantage of such an arrangement is that this inhibits the projection from catching on a user's clothing or causing other problems when not in use.

The saw guide may comprise a series of raised strips and/or humps which define a substantially planar surface by which a saw may be guided.

For the avoidance of doubt, the term "window" as used in the appended Claims is intended to include an aperture in the housing through which part of the tape can be viewed.

## Claims

1. A tape measure which comprises a housing (11; 31) with a first end and a second end and a tape (12; 32) having a scale (14; 33) on at least one side thereof, the arrangement being such that, in use, said tape (12; 32) is extendable from and retractable into said housing (11; 31) through said first end, characterised in that said housing (11; 31) is provided with a member (20; 39) which, in use, projects from said housing and said second end is at the extremity of said member (20; 39).

2. A tape measure as claimed in Claim 1, further comprising a window (21; 40) in said housing (11; 31) the arrangement being such that, in use, part of said scale (14; 33) is visible through said window (21; 40), and the reading of said scale (14; 33) through said window (21; 40) includes the distance between said first end and said second end.

3. A tape measure as claimed in Claim 2, wherein said scale (14) is offset with respect to a scale (13) on another side thereof.

4. A tape measure as claimed in Claim 1, 2 or 3, wherein said member (20; 39) comprises a substantially flat edge.

5. A tape measure as claimed in Claim 1, 2, 3 or 4, wherein said member (20; 39) comprises at least two rounded corners.

6. A tape measure as claimed in Claim 1, 2, 3, 4 or 5, wherein said window (21; 40) comprises a hairline (23; 42) for reading said scale (14; 33).

7. A tape measure as claimed in any of Claims 1 to 6, further comprising a first guide (43) located adjacent said first end within said housing (31), by which, in use, said tape (32) is guided.

8. A tape measure as claimed in Claim 7, wherein said first guide (43) comprises a guide wheel (45) and/or a guide member (44) arranged so that, in use, said tape (32) passes therearound or therebetween.

9. A tape measure as claimed in any preceding Claim, further comprising a second guide (46) located adjacent said window (40) within said housing (31), by which, in use, said tape (32) is guided.

10. A tape measure as claimed in any preceding Claim, further comprising a releasable locking means (19; 38) which, in use, can releasably lock said tape (12; 32) in an extended position.
